# EUROPÄISCHE PATENTSCHRIFT

(11) **EP 3 989 187 B1**
(45) Veröffentlichungstag und Bekanntmachung des Hinweises auf die Patenterteilung: **15.01.2025**
(21) Anmeldenummer: 21203091.0
(22) Anmeldetag: 18.10.2021
(51) Int. Cl.: G07D 7/1205, G07D 7/00, G03H 1/26, G03H 1/22, G03H 1/02, G03H 1/00

(54) **VERFAHREN ZUR ECHTHEITSVERIFIKATION EINES AUS MEHREREN TEILEN GEBILDETEN SICHERHEITSMERKMALS EINES WERT- ODER SICHERHEITSPRODUKTS**
METHOD FOR VERIFYING THE AUTHENTICITY OF A SECURITY FEATURE OF A VALUE OR SECURITY PRODUCT FORMED FROM SEVERAL PARTS
PROCÉDÉ DE VÉRIFICATION DE L'AUTHENTICITÉ D'UNE CARACTÉRISTIQUE DE SÉCURITÉ, FORMÉE DE PLUSIEURS PARTIES, D'UN PRODUIT DE VALEUR OU DE SÉCURITÉ

(30) Priorität: 22.10.2020 DE 102020127879
(43) Veröffentlichungstag der Anmeldung: 27.04.2022
(73) Patentinhaber: Bundesdruckerei GmbH, 10969 Berlin (DE)
(72) Erfinder: Knebel, Michael, 13086 Berlin (DE); Sprenger, Martin, 10317 Berlin (DE); Grieser, Ralf, 10589 Berlin (DE)
(74) Vertreter: Hentrich Patent- & Rechtsanwaltspartnerschaft mbB

(56) Entgegenhaltungen:
- DE-A1- 102015 116 708
- DE-A1- 102017 120 536
- DE-A1- 102018 217 560
- US-A1- 2006 022 059

## Beschreibung

Die Erfindung betriff ein Verfahren zur Echtheitsverifikation eines aus mehreren Merkmalsteilen gebildeten und dadurch wenigstens zwei optisch aktivierbare Zustände aufweisenden Sicherheitsmerkmals eines Wert- oder Sicherheitsprodukts unter Nutzung eines mobilen Endgeräts, das wenigstens eine Lichtquelle und wenigstens einen Bildsensor aufweist.

Wert- oder Sicherheitsdokumente können beispielsweise ein Personaldokument, eine Scheckkarte, ein nicht personalisierter Berechtigungsausweis, wie eine Fahrkarte oder ein Zahlungsmittel, oder ein für die Produktsicherung bestimmtes Wert- oder Sicherheitselement, sein.

Aus dem Stand der Technik ist es beispielsweise bekannt, Hologramme als Sicherheitsmerkmale in Sicherheitsdokumente oder Wertdokumente zu integrieren. Sicherheitsmerkmale oder Sicherheitselemente sind solche Entitäten, welche mindestens ein Merkmal aufweisen, welches ein unautorisiertes Duplizieren, Nachahmen und/oder Verfälschen eines Gegenstands erschwert, in welchen das Sicherheitselement integriert ist. Hologramme werden als Sicherheitsmerkmale beispielsweise in Reisepässen oder Personalausweisen verwendet. Sie werden jedoch auch in Banknoten, Führerscheinen, Visa, anderen Wertzeichen, Etiketten oder Tickets, Kreditkarten, Bankkarten, Telefonkarten oder Ähnlichem eingesetzt.

Eine besondere Gruppe von Hologrammen stellen Volumenhologramme dar. Bei einem Volumenhologramm ist eine beugende Struktur des Hologramms im Volumen des holografischen Aufzeichnungsmaterials gespeichert. Als Aufzeichnungsmaterialien für Volumenhologramme werden in Wert- und/oder Sicherheitsdokumenten in der Regel holografische Belichtungsfilme eingesetzt, die zumeist auf Rollen bereitgestellt werden. Diese Belichtungsfilme sind geeignet, Interferenzstrukturen zu speichern, deren charakteristische Abmessungen im Bereich der Lichtwellenlänge des Lichts liegen, welches zur Aufzeichnung bzw. Rekonstruktion des Hologramms verwendet wird.

Bei einem Kontaktkopierverfahren wird der holografische Belichtungsfilm vor einem Master angeordnet, in dem beugende Strukturen ausgebildet sind, die in den holografischen Belichtungsfilm "übertragen" werden sollen. Die beugenden Strukturen des Masters werden bei diesem Verfahren somit in den holografischen Film kopiert. Hierfür wird kohärentes Licht durch den holografischen Film, der in unmittelbarer Nähe vor dem Master oder in Kontakt mit dem Master vor diesem angeordnet ist, auf den Master gestrahlt. Die beugenden Strukturen in dem Master beugen das Licht so, dass das gebeugte Licht in den holografischen Film zurückgestrahlt wird. Dort interferiert dieses mit dem kohärenten Licht, welches zur Beleuchtung des Masters genutzt wird. In dem holografischen Film bildet sich somit eine Interferenzstruktur aus, welche durch das an dem Master gebeugte Licht festgelegt ist. Wird der holografische Film entwickelt und rekonstruiert, so gleicht die Rekonstruktion derjenigen, die beim Beleuchten des Masters zu beobachten ist. In dem holografischen Film wird ein Hologramm gespeichert, welches auch als Denisjuk-Hologramm bezeichnet wird und ein Volumenreflexionshologramm ist. Es versteht sich, dass das eingestrahlte Licht eine geeignete Wellenlänge (oder geeignete Wellenlängen) und eine geeignete Einstrahlrichtung (oder geeignete Einstrahlrichtungen) aufweisen muss, so dass eine Beugung an der Beugungsstruktur in der gewünschten Weise erfolgt.

Bei Sicherheits- oder Wertdokumenten eignet sich beispielsweise der Einsatz von aus Volumenhologrammen gebildeten holografischen Merkmalen, da sie besonders geeignet sind, sich bei beispielsweise lotrechter Betrachtung des belichteten und entwickelten holografischen Films verifizieren zu lassen. Eine Einstrahlung des Rekonstruktionslichts erfolgt hierbei vorzugsweise unter einem spitzen Winkel, beispielsweise unter 45 Grad zum Lot. Der Winkel zwischen der Einstrahlrichtung des Rekonstruktionslichts und der Ausfallrichtung des an dem erzeugten Volumenhologramm gebeugten Lichts, welches die Information des Hologramms rekonstruiert, wird im Wesentlichen bei der Herstellung des Masters festgelegt.

In der DE 10 2007 052 952 A1 ist ein Sicherheitsdokument beschrieben, das zwei aneinander angrenzende Volumenreflexionshologramme umfasst, wovon ein erstes Volumenreflexionshologramm aus einer stärker streuenden Schicht und ein zweites Volumenreflexionshologramm aus einer schwächer streuenden Schicht gebildet ist. Bei beiden Schichten wird die Intensität der Rekonstruktion größer, je näher man sich dem Belichtungsausfallswinkel nähert. Dieses Sicherheitsdokument hat sich in der Praxis gut bewährt und bietet einen adäquaten Schutz vor Produktfälschungen.

In der DE 10 2015 116 708 A1 wird ein Verfahren zum Verifizieren eines Dokuments beschrieben, bei dem ein Smartphone mit einer Bildkamera zwei blickwinkelabhängige Sicherheitsmerkmale aus jeweils zwei unterschiedlichen Positionen erfasst. Dabei wird eine Beleuchtung des Smartphones zum Anregen der beiden Sicherheitsmerkmale genutzt. Die Kamera erfasst dann unter zwei unterschiedlichen Blickwinkeln die beiden Sicherheitsmerkmale.

Die US 2006 / 0 022 059 A1 beschreibt ein holographisches Sicherheitsmerkmal, das zwei unterschiedliche optische Zustände aufweist, sowie ein mobiles Handgerät zum Auslesen des Sicherheitsmerkmals. Das holographisches Sicherheitsmerkmal weist in Abhängigkeit der Einstrahlrichtung eine unterschiedliche Rekonstruktion auf.

In der DE 10 2018 217 560 A1 wird ein Sicherheitsdokument mit einem Sicherheitselement beschrieben, das mehrere Beugungsstrukturen besitzt, die bei unterschiedlichen Einstrahl- und Rekonstruktionswinkeln optisch erfassbar sind.

In der DE 10 2017 120 536 A1 werden ein Verfahren zur Herstellung eines Hologramms, sowie ein Sicherheitselement und ein Sicherheitsdokument beschrieben. Im Kern beschäftigt sich diese Druckschrift mit Hologrammen, die über mehrere virtuelle Hologrammebenen verteilt sind, sodass bei unterschiedlichen Betrachtungswinkeln unterschiedliche Darstellungen des Hologramms auf dem Sicherheitsdokument zu erkennen sind.

Es besteht ein Bedürfnis, Sicherheitsmerkmale umfassend Hologramme oder umfassend optisch variable Merkmale auch dann zuverlässig maschinell auslesen zu können, wenn keine stationäre Lesevorrichtung zur Verfügung steht.

Es ist daher die Aufgabe der vorliegenden Erfindung, ein Verfahren zur Echtheitsverifikation eines aus mehreren Merkmalsteilen gebildeten und dadurch wenigstens zwei unterschiedliche optisch aktivierbar Zustände aufweisenden Sicherheitsmerkmals eines Wert- oder Sicherheitsprodukts anzugeben, das auch einen mobilen Einsatz ermöglicht und dabei eine zuverlässige maschinelle Prüfung eines aus mehreren Teilen bestehenden Sicherheitsmerkmals erlaubt.

Diese Aufgabe wird mit einem Verfahren mit den Merkmalen des Anspruchs 1 gelöst. Vorteilhafte Ausgestaltungen mit zweckmäßigen Weiterbildungen der Erfindung sind in den abhängigen Ansprüchen angegeben.

Das erfindungsgemäße Verfahren umfasst die folgenden Schritte:
- Bestrahlen des Sicherheitsmerkmals mit der wenigstens einen Lichtquelle des mobilen Endgeräts unter einem ersten Winkel und prüfen, ob dadurch ein erster optisch aktiver Zustand des Sicherheitsmerkmals hervorgerufen und vom Bildsensor erfasst wurde,
- Bestrahlen des Sicherheitsmerkmals mit der wenigstens einen Lichtquelle des mobilen Endgeräts unter einem vom ersten Winkel abweichenden zweiten Winkel und prüfen, ob dadurch wenigstens ein zweiter optisch aktiver Zustand des Sicherheitsmerkmals hervorgerufen und vom Bildsensor erfasst wurde, und
- Feststellen einer Produktfälschung, wenn einer der optisch aktiven Zustände vom Bildsensor nicht oder nicht vollständig erfasst werden konnte.

Sind die Merkmalsteile als Hologramme, insbesondere als Volumenreflexionshologramme, gebildet, so rekonstruieren diese unter unterschiedlichen Einfallswinkeln der Lichtstrahlung, die von der Lichtquelle des mobilen Endgeräts emittiert wird. Es können also alle Merkmalsteile eines komplexen Sicherheitsmerkmals mit dem mobilen Endgerät, "sichtbar" gemacht und mittels des Bildsensors aufgezeichnet werden. Anhand der aufgezeichneten Bilder erfolgt dann eine Echtheitsprüfung, vorzugsweise durch eine in das mobile Endgerät integrierte Auswerteeinrichtung, insbesondere in einem Mikroprozessor des mobilen Endgeräts.

Eine "quasistatische" Prüfmöglichkeit sieht erfindungsgemäß vor, dass der Bildsensor die Kamera des als Smartphone gebildeten mobilen Endgeräts ist, dass die Lichtquelle durch ein Display des Smartphones gebildet ist, und dass das Display selektiv beleuchtet wird, um wenigstens zwei der optisch aktiven Zustände des Sicherheitsmerkmals hervorzurufen. Das Display weist somit eine Vielzahl an Einzellichtquellen auf, die einzeln oder in Gruppen angesteuert werden können, um auf diese Weise die einzelnen Merkmalsteile des Sicherheitsmerkmals optisch zu aktivieren, damit diese durch den Bildsensor, insbesondere durch die Kamera erfasst werden können.

In diesem Zuge ist auch die Möglichkeit vorhanden, dass an dem Display ein Leuchtbalken angezeigt und in einer Richtung entlang des Displays verstellt wird, um unterschiedliche Bereiche des Sicherheitsmerkmals zu beleuchten, um wenigstens zwei der optisch aktiven Zustände des Sicherheitsmerkmals hervorzurufen. Diese Variante agiert also nach Art eines "Scanners", der bei fortwährender Bewegung nach und nach alle Merkmalsteile des Sicherheitsmerkmals optisch aktiviert; mithin für den Bildsensor "sichtbar" macht.

Beim Verstellen des Leuchtbalkens kann dieser in einer Weitergestaltung auch gezielt seine Farbgebung ändern, sodass auch eine unterschiedliche Farbgebung der einzelnen Merkmalsteile oder deren Rekonstruktion ermöglicht ist.

Für alle Ausgestaltungen der vorliegenden Erfindung sei angemerkt, dass die Beleuchtung für die Aktivierung und auch die Rekonstruktion oder die Emission des Sicherheitsmerkmals oder einzelnen Teilen davon auch nicht im sichtbaren Bereich erfolgen können. Somit sind beispielsweise Varianten mit einer Infrarotanregung (IR) mit einer IR-Antwort realisierbar. Anregungen im Ultraviolettbereich (UV) und Emissionen im UV sind ebenfalls möglich. Es kann auch eine optische Aktivierung im nicht-sichtbaren, beispielsweise im Infrarotbereich erfolgen, wobei die Merkmalsteile oder das Sicherheitsmerkmal dann im aktivierten Zustand im sichtbaren Wellenlängenbereich (VIS) erkennbar sind.

Es ist sinnvoll, wenn das Display an unterschiedlichen Stellen leuchtet, wodurch einzelne oder alle Merkmalsteile des Sicherheitsmerkmals gleichzeitig sichtbar gemacht und von der Kamera erfasst werden. Das Display bildet eine Vielzahl von Einzel-Lichtquellen an unterschiedlichen Positionen. In Abhängigkeit der Displaysteuerung oder in Abhängigkeit der zugrunde liegenden Programmierung wie eine einzige "ortsveränderliche" Lichtquelle verhalten. Somit ist das Verhalten des Displays abhängig von einer grafischen Umsetzung.

Es hat sich ferner als vorteilhaft - aber als zweitrangig - erwiesen, wenn an unterschiedlichen Stellen des Displays Leuchtfelder, insbesondere Farbfelder mit einer vorgegebenen unterschiedlichen Farbgebung, angezeigt werden, wodurch alle Merkmalsteile des Sicherheitsmerkmals gleichzeitig sichtbar gemacht und von der Kamera erfasst werden. Auf diese Weise wird die Bildanzahl der vom Bildsensor zur erfassenden Bilder reduziert bei der Prüfung der Echtheitsverifikation des Wert- oder Sicherheitsprodukts, da nur eine einzige Aufnahme vonnöten ist, um alle aktivierten Merkmalsteile gleichzeitig zu erfassen.

Es hat sich auch als vorteilhaft erwiesen, wenn das mobile Endgerät eine der Anzahl an Merkmalsteilen des zu überprüfenden Sicherheitsmerkmals entsprechende Anzahl an Lichtquellen aufweist, und wenn die Lichtquellen selektiv vereinzelt eingeschaltet oder zeitlich wiederkehrend eingeschaltet werden, um wenigstens zwei der optisch aktiven Zustände des Sicherheitsmerkmals hervorzurufen, die dann mittels des Bildsensors erfasst werden. Auf diese Weise können mehrere Bilder oder auch ein Videostream vom Bildsensor erfasst werden, bei denen jeweils ein unterschiedlicher Merkmalsteil des Sicherheitsmerkmals optisch aktiviert, mithin sichtbar gemacht, ist. Alle Bilder werden dann von einer Auswerteeinheit digital "übereinandergelegt", wobei das dadurch entstehende Gesamtbild dann der Echtheitsverifikation unterzogen werden kann.

Unter einer "zeitlich wiederkehrend einschaltenden Lichtquelle" ist eine solche zu verstehen, die nicht dauerhaft eingeschaltet ist, sondern die mit vorgegebener Frequenz eingeschaltet und wieder ausgeschaltet wird. Es können auch lumineszierende Sicherheitsmerkmale oder lumineszierende Merkmalsteile verwendet werden, die beispielsweise mittels eines einzelnen Lichtblitzes der Lichtquelle angeregt werden, wobei mittels der fortwährenden Erfassung des angeregten Merkmals dessen Abklingverhalten untersucht werden kann, um zu prüfen, ob das ermittelte Abklingverhalten demjenigen eines unverfälschten Wert- oder Sicherheitsprodukt entspricht.

Es ist ferner von Vorteil, wenn die Lichtquellen nicht selektiv einzeln, sondern alle gleichzeitig eingeschaltet werden oder auch alle gleichzeitig zeitlich wiederkehrend eingeschaltet werden, um wenigstens zwei der optisch aktiven Zustände des Sicherheitsmerkmals hervorzurufen, die dann mittels des Bildsensors erfasst werden. Auch auf diese Weise werden also die Merkmalsteile des Sicherheitsmerkmals alle gleichzeitig optisch aktiviert und können in einer einzigen Aufnahme mittels des Bildsensors erfasst werden.

Im Zuge der Auswertung und der Prüfung auf Echtheit, hat es sich als vorteilhaft erwiesen, wenn alle vom Bildsensor erfassten Bilder des Sicherheitsmerkmals in ein gemeinsames Bild des Sicherheitsmerkmals oder des ganzen Wert- oder Sicherheitsprodukts mit den optisch aktiven Zuständen der Merkmalsteile gefasst werden, und wenn die im gemeinsamen Bild enthaltenen Merkmalsteile mit einem Referenzwert zur Echtheitsverifikation abgeglichen werden. Bei der Überlagerung der einzelnen Bilder können diese auf einen "gemeinsamen Nenner" zugeschnitten werden, sodass lediglich der zu überprüfende Bereich freigestellt ist und einer Echtheitsverifikation unterzogen wird, wodurch eine geringere Datenmenge für die Verarbeitung und Prüfung in der Auswerteeinheit vorliegt, so dass das Prüfen schneller erfolgt.

Es ist von Vorteil, wenn das mobile Endgerät einen Lagesensor umfasst, wenn beim Bestrahlen des Sicherheitsmerkmal die Lage des mobilen Endgeräts bezüglich des Wert- oder Sicherheitsprodukts anhand der vom Bildsensor und der vom Lagesensor erfassten Daten bestimmt wird, um daraus und aus den erfassten Einzelbildern das gemeinsame Bild - gegebenenfalls randbeschnitten - zusammenzufassen. Auf diese Weise kann aus der Lageinformation ferner darauf geschlossen werden, ob die Position der Merkmalsteile und des Sicherheitsmerkmals auf dem Wert- oder Sicherheitsprodukt zutreffend ist, wodurch auch hier bei einer unstimmigen Position auf eine Fälschung des Wert- oder Sicherheitsprodukts geschlossen werden kann.

Für eine verbesserte Echtheitsverifikation hat es sich als vorteilhaft erwiesen, wenn der Referenzwert für den Abgleich als eine Information auf dem Wert- oder Sicherheitsprodukt vorliegt, die beim Aufzeichnen des Sicherheitsmerkmals mit dem Bildsensor ebenfalls erfasst wird. Auf diese Weise wird also in den vom Bildsensor erfassten Daten zugleich auch der Referenzwert erfasst, wobei diese dann in der Auswerteeinheit mit dem mindestens einen optisch aktivierten Sicherheitsmerkmal abgeglichen werden kann. Der Referenzwert kann rein beispielhaft ein Textfeld, ein Barcode, eine Grafik oder dergleichen sein. Schlägt ein Abgleich mit dem Referenzwert fehl, so ist auf eine Fälschung des Wert- oder Sicherheitsprodukts zu schließen.

Es besteht darüber hinaus die Möglichkeit, dass der Referenzwert für den Abgleich eine in einer Datenbank gespeicherte Information ist, die in einem physikalischen Speicher des mobilen Endgeräts selbst oder in einem physikalischen Speicher eines übergeordneten Servers hinterlegt ist. Mit diesem übergeordneten Server kann das mobile Endgerät beispielsweise über eine drahtlose Kommunikationsverbindung Daten austauschen, wobei die Echtheitsverifikationsprüfung dann auf den Prozessoren des Servers oder auch auf dem Prozessor des mobilen Endgeräts erfolgen kann.

Es ist von Vorteil, wenn die Lichtquelle eingerichtet ist, unterschiedliche Farben zu emittieren, und wenn die Lichtquelle ihre Farbgebung in Abhängigkeit eines Einfallswinkels der von ihr emittierten Lichtstrahlen auf das Sicherheitsmerkmal ändert. Hierzu ist die Lichtquelle beispielsweise aus einer Mehrzahl von mit unterschiedlicher Wellenlängen Licht emittierenden, schmalbandigen LEDs gebildet.Auf diese Weise ändert sich also mit der "Bewegung" des Lichts der Lichtquelle und der damit verbundenen Änderung des Einstrahlungswinkels nicht nur der Ort eines - beispielsweise holografischen - Sicherheitsmerkmals auf dem Wert- oder Sicherheitsprodukts, sondern auch dessen Farbe in einer vorgegebenen Art. Auch die Farbgebung und die Farbreihenfolge gestatten eine verbesserte Verifikation der Echtheit.

In diesem Zuge ist es bevorzugt, wenn der Einfallswinkel der Lichtstrahlen auf das Sicherheitsmerkmal und damit auf das ganze Wert- oder Sicherheitsprodukt unter Nutzung der vom Lagesensor des mobilen Endgeräts erfassten Daten bestimmt wird.

Es ist von Vorteil, wenn ein erster Merkmalsteil durch ein erstes Volumenreflexionshologramm gebildet ist, das bei einer ersten Rekonstruktionswellenlänge und einer ersten Rekonstruktionseinstrahlrichtung rekonstruiert, und dass wenigstens ein zweiter Merkmalsteil durch ein zweites Volumenreflexionshologramm gebildet ist, das bei einer von der ersten Rekonstruktionseinstrahlrichtung abweichenden zweiten Rekonstruktionseinstrahlrichtung rekonstruiert. Dabei können beide Merkmalsteile bei derselben Rekonstruktionswellenlänge rekonstruieren, sodass die Farbgebung des Lichts der Emission der Lichtquelle keinen Einfluss auf die Art der Rekonstruktion der jeweiligen Merkmalsteile hat.

Es ist jedoch die Möglichkeit gegeben, dass das zweite Volumenreflexionshologramm ausschließlich bei einer von der ersten Rekonstruktionswellenlänge abweichenden zweiten Rekonstruktionswellenlänge rekonstruiert, sodass damit eine verbesserte Absicherung eines Wert- oder Sicherheitsprodukts geschaffen ist, das eine erhöhte Fälschungssicherheit aufweist.

Selbstverständlich können mehr als zwei der Merkmalsteile vorhanden sein. Beispielsweise ist ein dritter Merkmalsteil vorhanden, der durch ein drittes Volumenreflexionshologramm gebildet sein könnte. Eine andere Anzahl an Merkmalsteilen ist aber ebenfalls möglich.

Zur verbesserten Absicherung des Wert- oder Sicherheitsprodukts bei gleichzeitig verbesserter maschineller Auslesbarkeit, hat es sich als vorteilhaft erwiesen, wenn das wenigstens dritte Volumenreflexionshologramm ausgebildet ist, bei einem von der ersten Rekonstruktionseinstrahlrichtung und von der zweiten Rekonstruktionseinstrahlrichtung abweichenden dritten Rekonstruktionseinstrahlrichtung zu rekonstruieren.

Wenn mehr als zwei der Volumenreflexionshologramme eingesetzt werden, dann wird das aus den mehreren Volumenreflexionshologrammen gebildete Sicherheitsmerkmal in seiner Lage auf dem Substrat oder dem Kartenkörper unabhängiger. Diese Unabhängigkeit verstärkt sich zunehmend durch die Erhöhung an möglichen Rekonstruktionswinkeln/Rekonstruktionseinstrahlrichtungen; mithin also durch die Erhöhung der Anzahl der Volumenreflexionshologramme.

Es ist die Möglichkeit gegeben, dass die Volumenreflexionshologramme eine identische Form besitzen, was deren maschinelle Erkennung verbessert, da ein mobiles Endgerät dann stets auf das Vorliegen desselben Musters prüfen muss, um die Echtheit der Mehrzahl an Volumenreflexionshologrammen zu verifizieren.

In diesem Zuge ist es sinnvoll, wenn die Volumenreflexionshologramme als aneinander unmittelbar angrenzende Polygone gebildet sind. Diese können beispielsweise Dreiecke oder Vierecke, insbesondere Rechtecke oder Quadrate, sein.

Die maschinelle Auswertbarkeit wird aber auch dadurch begünstigt, wenn die Volumenreflexionshologramme als aneinander unmittelbar angrenzende Kreissektoren gebildet sind, deren Spitzen in einem gemeinsamen Punkt liegen.

Das mit dem mehrteiligen Sicherheitsmerkmal versehene Wert- oder Sicherheitsprodukt kann ein Wert- oder Sicherheitsdokument oder ein Sicherheitselement sein, d.h. ein Element, das beispielsweise mit einem gegen Nachahmung, Fälschung oder Verfälschung zu schützenden Gegenstand verbunden wird, beispielsweise ein Aufkleber, Etikett oder dergleichen. Als Wert- oder Sicherheitsprodukt kommen beispielsweise ein Reisepass, ein Personalausweis, ein Führerschein oder eine andere ID-Karte oder ein Zugangskontrollausweis, ein Fahrzeugschein, ein Fahrzeugbrief, ein Visum, ein Scheck, sonstige Zahlungsmittel, insbesondere eine Banknote, eine Scheck-, eine Bank-, oder eine Kredit- oder Barzahlungskarte, eine Kundenkarte, eine Gesundheitskarte, eine Chipkarte, ein Firmenausweis, ein Berechtigungsnachweis, ein Mitgliedsausweis oder ein anderes ID-Dokument infrage, wobei gewährleistet sein sollte, dass dieses über ein Portraitfoto verfügt oder ein solches daran angebracht ist.

Vorzugsweise liegt das Wert- oder Sicherheitsprodukt in ID 1-, ID 2-, ID 3- oder in irgendeinem anderen Format vor, beispielsweise in Heftform, wie bei einem passähnlichen Gegenstand. Das Wert- oder Sicherheitsprodukt ist im Allgemeinen ein Laminat aus mehreren Dokumentenlagen, die passgenau unter Wärmeeinwirkung und unter erhöhtem Druck flächig miteinander verbunden sind. Diese Produkte sollen den normierten Anforderungen genügen, beispielsweise ISO 10373, ISO/IEC 7810, ISO 14443.

Vorzugsweise bestehen die Produktlagen aus einem Trägermaterial, das sich für eine Lamination eignet. Das Wert- oder Sicherheitsprodukt kann aber vorzugsweise aus einem Polymer gebildet sein, das ausgewählt ist aus einer Gruppe, umfassend Polycarbonat (PC), insbesondere Bisphenol A-Polycarbonat oder ein Polycarbonat, gebildet mit einem geminal disubstituierten Bis-(hydroxyphenyl)-cycloalkan, Polyethylenterephthalat (PET), deren Derivate, wie Glykol-modifiziertes PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-Styrol-Copolymer (ABS) sowie deren Derivate, und/oder Papier und/oder Pappe und/oder Glas und/oder Metall und/oder Keramik. Außerdem kann das Produkt auch aus mehreren dieser Materialien hergestellt sein. Bevorzugt besteht es aus PC, PVC und PET. Die Polymere können entweder gefüllt oder ungefüllt vorliegen. Im letzteren Falle sind sie vorzugsweise transparent oder transluzent. Falls die Polymere gefüllt sind, sind sie opak. Die vorstehenden Angaben beziehen sich sowohl auf miteinander zu verbindende Folien als auch auf Flüssigformulierungen, die auf ein Vorprodukt aufgebracht werden, wie einen Schutz- oder Decklack. Bevorzugt wird das Produkt aus drei bis zwölf, vorzugsweise vier bis zehn Folien, hergestellt. Die Folien können ferner Druckschichten tragen. Ein solcherart gebildetes Laminat kann abschließend ein- oder beidseitig mit dem Schutz- oder Decklack oder mit einer Folie überzogen werden. Die Folie kann insbesondere ein Volumenhologramm, eine Folie mit einem Oberflächenhologramm (beispielsweise einem kinegraphischen Element) oder eine Kratzschutzfolie sein. Derart gebildete Overlaylagen schützen ein darunter angeordnetes Sicherheitsmerkmal und/oder verleihen dem Dokument die erforderliche Abriebfestigkeit.

Die vorliegende Erfindung wird nachfolgend anhand von Figuren näher erläutert, wobei die dargestellten Beispiele lediglich exemplarischen Charakter haben und keine Einschränkung hinsichtlich der Tragweite der beschriebenen Erfindung darstellen. Es zeigen im Einzelnen:

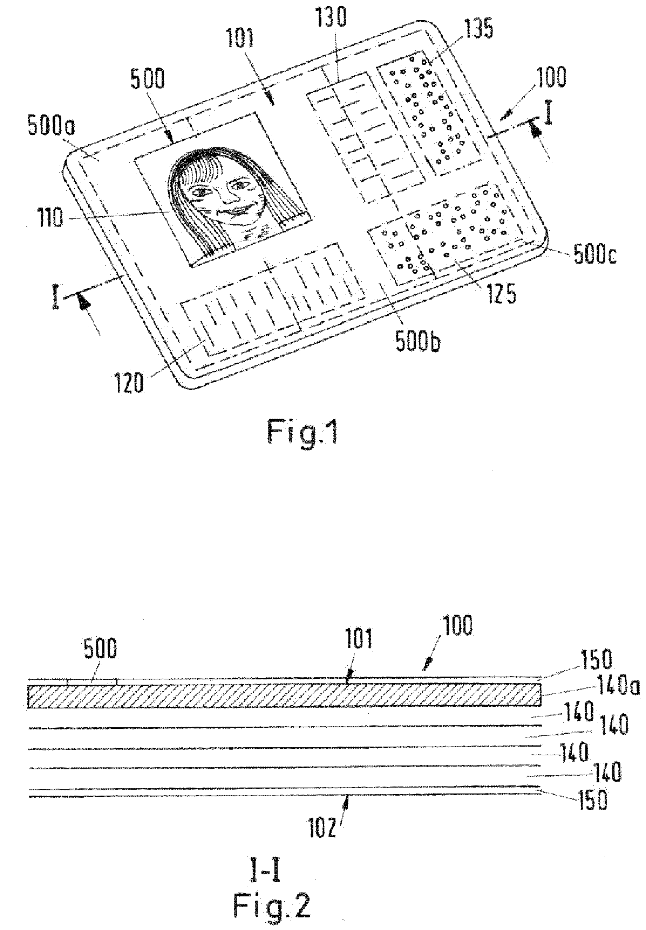

- Fig. 1: eine schematische isometrische Darstellung eines Wert- oder Sicherheitsprodukts in Form einer Identitätskarte,
- Fig. 2: eine schematische Schnittansicht der Identitätskarte entlang der Linie I-I,

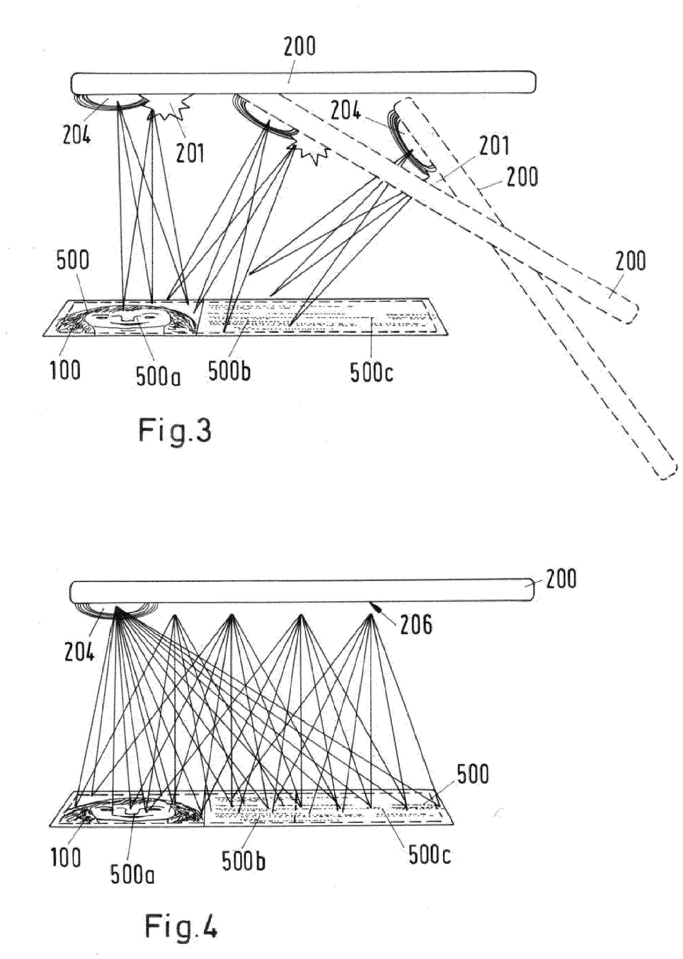

- Fig. 3: eine nicht von der Erfindung umfasste Anordnung, bei der das stark schematisierte Wert- oder Sicherheitsprodukt mit einer LED-Lichtquelle eines manuell bewegten mobilen Endgeräts bestrahlt wird, um die Merkmalsteile des Sicherheitsmerkmals optisch zu aktivieren, wobei die optisch aktivierten Teile von dem Bildsensor des mobilen Endgeräts erfasst werden (dynamische Echtheitsverifikation),
- Fig. 4: eine Anordnung bei der das stark schematisierte Wert- oder Sicherheitsprodukt mit einer Lichtquelle in Form des Displays des ansonsten ortsfest gehaltenen mobilen Endgeräts bestrahlt wird, um die Merkmalsteile des Sicherheitsmerkmals optisch zu aktivieren, wobei die optisch aktivierten Teile von dem Bildsensor des mobilen Endgeräts erfasst werden (quasistatische Echtheitsverifikation),

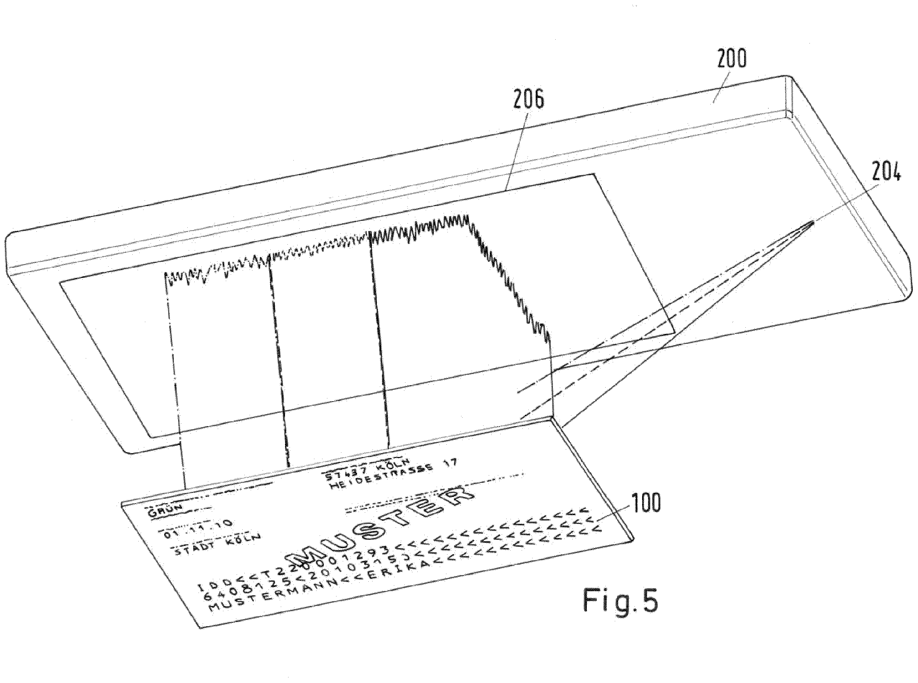

- Fig. 5: eine nicht von der Erfindung umfasste Anordnung bei der das stark schematisierte Wert- oder Sicherheitsprodukt mit einer Mehrzahl an Lichtquellen des mobilen Endgeräts bestrahlt wird, um die Merkmalsteile des Sicherheitsmerkmals optisch zu aktivieren, wobei die optisch aktivierten Teile von dem Bildsensor des mobilen Endgeräts erfasst werden, und

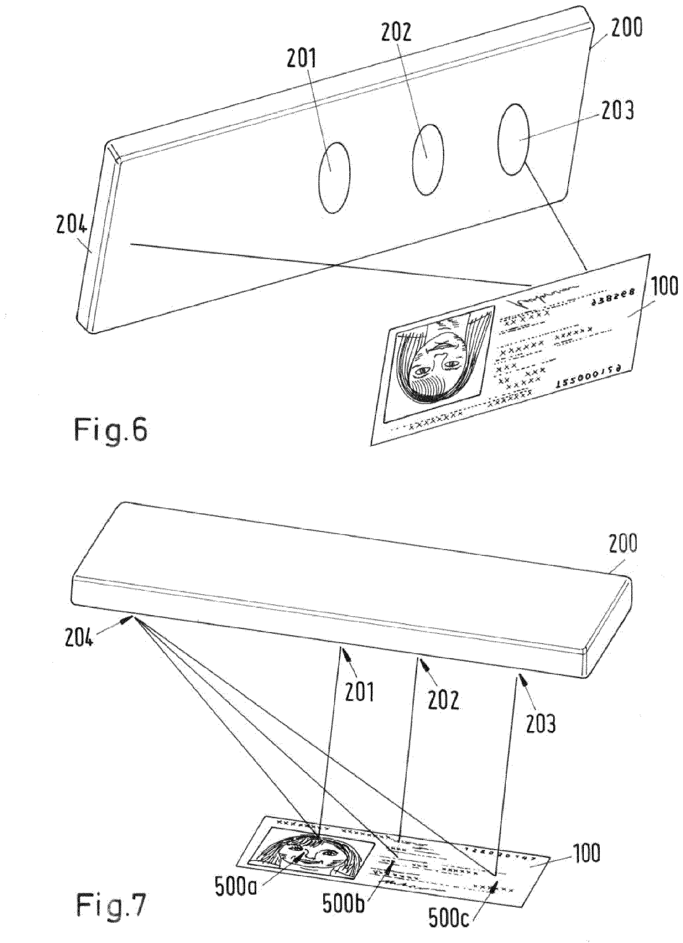

- Fig. 6: eine Anordnung bei der das stark schematisierte Wert- oder Sicherheitsprodukt mit einer Mehrzahl an Lichtquellen des Displays mobilen Endgeräts bestrahlt wird, um die Merkmalsteile des Sicherheitsmerkmals optisch zu aktivieren, wobei die optisch aktivierten Teile von dem Bildsensor des mobilen Endgeräts erfasst werden.

In Figur 1 ist ein mit einem Sicherheitsmerkmal 500 versehenes Wert- oder Sicherheitsprodukt 100 gezeigt. Das Wert- oder Sicherheitsdokument 100 kann ein Personaldokument, wie ein Reisepass, ein Personalausweis, ein Zugangsausweis oder dergleichen, eine Scheckkarte oder eine Banknote oder noch ein anderes Dokument, sein. Alle nachfolgenden Beispiele werden stellvertretend für andere Dokumententypen anhand einer derartigen Karte beschrieben.

In den Figuren 1 und 2 ist das Wert- oder Sicherheitsprodukt 100 in Form einer Identitätskarte dargestellt, die beispielsweise als Laminat aus mehreren innenliegenden Polymerlagen 140 zusammengefügt worden ist. Beispielsweise können die Polymerlagen aus PC und/oder PET bestehen. Die einzelnen Lagen können ungefüllt oder mit Füllstoffen gefüllt sein. In letzterem Falle sind sie opak, ansonsten transparent. Die Lagen können vorzugsweise derart miteinander verbunden sein, dass sie einen monolithischen Block bilden, der praktisch nicht gespalten werden kann.

In Figur 2 sind nur zur Veranschaulichung die vor dem Laminieren noch vereinzelten Lagen sichtbar dargestellt. Im fertigen Laminat sind die Grenzflächen nicht mehr sichtbar. Die äußeren Schichten 150 der Karte können als eine abschließende Kunststoff-Schutzfolie gebildet sein oder aus einem Schutzlack bestehen, der nach dem Laminieren auf die Karte aufgetragen worden ist. Die Kunststoff-Schutzfolie bzw. der Schutzlack sind transparent, sodass darunter liegende Informationen von außen sichtbar sind. Insbesondere bleiben dabei aber eine oder mehreren Druckschichten 140a bspw. eines Portraitbilds 110 sichtbar, die vorzugsweise unmittelbar neben oder hinter der äußeren Schicht 150 angeordnet ist bzw. angeordnet sind.

Das Wert- oder Sicherheitsprodukt 100 weist eine Oberseite 101 und eine Unterseite 102 auf. Auf der Oberseite 101 befinden sich das Gesichts- oder Portraitbild 110 des Inhabers der Karte sowie Datenfelder, nämlich beispielsweise ein erstes Datenfeld 120 und ein zweites Datenfeld 130 mit Karten- und Inhaberdaten in Klarschrift. Die Daten im ersten und im zweiten Datenfeld 120, 130 sind durch Druckschichten hergestellt, die auf einer äußeren Lage des Dokuments, aber unmittelbar unter der außenliegenden Schutzschicht 150, liegen. Die Daten in einem dritten Datenfeld 125 und in einem vierten Datenfeld 135 geben die in Klarschrift vorliegenden Personalisierungsdaten nochmals in Braille-Schrift wieder.

Es ist zu erkennen, dass die Identitätskarte mit einem Sicherheitsmerkmal 500 versehen ist, das in Form eines Identigrams (eine eingetragene Marke der Anmelderin) aus mehreren einzelnen Volumenreflexionshologrammen, mithin also aus mehreren einzelnen Merkmalsteilen 500a, 500b, 500c gebildet ist. Die Anordnung, die Größe und die Formgebung der Merkmalsteile 500a, 500b, 500c ist rein beispielhaft gewählt, sodass auch andere Anordnungen, Größen oder Abmessungen möglich sind.

Um die Identitätskarte maschinell auslesen zu können, wird ein in den Figuren 3 bis 6 gezeigtes mobiles Endgerät 200 verwendet, das mit einer Lichtquelle 201 und wenigstens einem Bildsensor 204 versehen ist. Dieses mobile Endgerät 200 ist ein Smartphone, wobei der Bildsensor 204 die Kamera des Smartphones und die Lichtquelle 201 eine der Kamera zugeordnete LED des Smartphones ist. Bei der Kamera kann es sich um die Frontkamera oder auch um die Rückkamera des Smartphones handeln. Dieses mobile Endgerät 200 wird jedenfalls dazu genutzt, um eine Echtheitsverifikation des aus den mehreren Merkmalsteilen 500a, 500b, 500c gebildeten komplexen Sicherheitsmerkmals 500 des Wert- oder Sicherheitsprodukts 100 zu verifizieren, was insbesondere durch die folgenden Schritte erfolgt:
- Bestrahlen des Sicherheitsmerkmals 500 mit der wenigstens einen Lichtquelle 201 des mobilen Endgeräts 200 unter einem ersten Winkel und prüfen, ob dadurch ein erster optisch aktiver Zustand des Sicherheitsmerkmals 500 hervorgerufen und vom Bildsensor 204 erfasst wurde,
- Bestrahlen des Sicherheitsmerkmals 500 mit der wenigstens einen Lichtquelle 201 des mobilen Endgeräts 200 unter einem vom ersten Winkel abweichenden zweiten Winkel oder Bestrahlen des Sicherheitsmerkmals 500 mit einer zweiten Lichtquelle 202 und prüfen, ob dadurch wenigstens ein zweiter optisch aktiver Zustand des Sicherheitsmerkmals 500 hervorgerufen und vom Bildsensor 204 erfasst wurde, und
- Feststellen einer Produktfälschung, wenn einer der optisch aktiven Zustände vom Bildsensor 204 nicht oder nicht vollständig erfasst werden konnte.

In der Figur 3 wird dabei die nicht von der Erfindung umfasste Möglichkeit illustriert, dass zur Erfassung der mehreren Merkmalsteile 500a, 500b, 500c das mobile Endgerät 200 relativ bezüglich dem Wert- oder Sicherheitsprodukt 100 bewegt wird, damit unterschiedliche Einfallswinkel für die Bestrahlung mittels der als LED gebildeten Lichtquelle 201 realisierbar sind. Währenddessen dieser Bewegung ist zugleich der als Kamera gebildete Bildsensor 204 aktiv oder eingeschaltet und zeichnet die Einzelbilder oder einen Videostream von dem Wert- oder Sicherheitsprodukts 100 auf, wobei die Einzelbilder anschließend durch einen Prozessor des mobilen Endgeräts 200 digital "übereinandergelegt" und so zu einem gemeinsamen Bild zusammengesetzt werden, in welchem alle Merkmalsteile 500a, 500b, 500c optisch aktiviert dargestellt sind. Auf diese Weise kann also das mehrteilige oder komplex gebildete Sicherheitsmerkmal 500 vollständig auf Echtheit überprüft werden.

In der Figur 4 wird dabei die Möglichkeit illustriert, dass als Lichtquelle 201 ein Display 206 des mobilen Endgeräts 200 genutzt wird, wobei das Display 206 selektiv leuchten kann, um dadurch selektiv die einzelnen Merkmalsteile 500a, 500b, 500c optisch zu aktivieren und zugleich diese optische aktivierte Darstellung des Sicherheitsmerkmals 500 mittels der Kamera zu erfassen. Das Display 206 des Smartphones kann statt einer selektiven Beleuchtung auch diffus großflächig leuchten, sodass dadurch ebenfalls alle Bestandteile des Sicherheitsmerkmals 500 optisch aktiviert werden können, wodurch sich in einem einzigen Bild alle optisch aktiven Zustände erfassen und anschließend überprüfen lassen. Eine alternative oder ergänzende Ausgestaltung sieht vor, dass an dem Display 206 ein Leuchtbalken angezeigt und in eine Richtung entlang des Displays 206 verstellt wird, um unterschiedliche Bereiche des Sicherheitsmerkmals 500 zu beleuchten, damit die optisch aktiven Zustände des Sicherheitsmerkmals 500 nach Art eines "Scanners" hervorgerufen und durch den Bildsensor 204, mithin von der Kamera erfasst werden können.

In der Figur 5 wird die weitere Möglichkeit illustriert, wonach - nacheinander oder gleichzeitig - das Displays 206 an unterschiedlichen Stellen leuchtet, wodurch ebenfalls alle Merkmalsteile 500a, 500b, 500c des Sicherheitsmerkmals 500 vorzugsweise gleichzeitig sichtbar machen, damit sie von der Kamera erfasst werden können. Es besteht dabei die Möglichkeit, dass über das Display 206 verteilt eine unterschiedliche Farbgebung vorliegt, sodass auch eine vorgegebene Farbgebung für die Rekonstruktion der einzelnen Hologrammteile hervorgerufen werden kann.

Die Figuren 6 und 7 verweisen auf die nicht von der Erfindung erfasste Möglichkeit, dass das mobile Endgerät 200 wenigstens oder genau eine der Anzahl an Merkmalsteilen 500a, 500b, 500c des zu überprüfenden Sicherheitsmerkmals 500 entsprechende Anzahl an Lichtquellen 201, 202, 203 aufweist, und dass die Lichtquellen 201, 202, 203 selektiv einzeln oder auch gemeinsam eingeschaltet werden können, um die optisch aktiven Zustände des Sicherheitsmerkmals 500 hervorzurufen, die dann mittels des Bildsensors 204 erfasst werden.

Typischerweise umfasst das als Smartphone gebildete mobile Endgerät 200 aller vorangehend erläuterten Ausgestaltungen zusätzlich einen Lagesensor, wobei der Einfallswinkel der Lichtstrahlen auf das Sicherheitsmerkmal 500 unter Nutzung der vom Lagesensor erfassten Daten bestimmbar ist, und wobei die Möglichkeit gegeben ist, dass in Abhängigkeit der Lagedaten auch die Lichtquelle 201, 202, 203 dazu eingerichtet ist, unterschiedliche Farben zu emittieren.

Für die abschließende Verifikation ist die Möglichkeit gegeben, dass ein Referenzwert, zum Beispiel in Form eines Textfelds, eines Barcodes, einer Grafik oder dergleichen, für den Abgleich mit den Informationen des Sicherheitsmerkmals 500 herangezogen wird, wobei dieser Referenzwert vorzugsweise als eine Information auf dem Wert- oder Sicherheitsprodukt 100 ebenfalls vorliegt. Somit wird dieser Referenzwert mit dem Bildsensor 204 für die Echtheitsprüfung ebenfalls erfasst. Alternativ oder ergänzend kann der Referenzwert für den Abgleich auch eine in einer Datenbank gespeicherte Information sein, die in einem physikalischen Speicher des mobilen Endgeräts 200 oder auch in einem physikalischen Speicher eines übergeordneten Servers hinterlegt ist, mit welchem das mobile Endgerät 200 in einer Kommunikationsverbindung steht.

Typischerweise ist jeder der Merkmalsteile 500a, 500b, 500c als ein Volumenreflexionshologramm gebildet, die jeweils unter unterschiedlichen Einfallswinkeln oder Rekonstruktionseinstrahlrichtungen rekonstruieren.

Dabei liegt vorliegend ein erstes Volumenreflexionshologramm (Merkmalsteil 500a), ein zweites Volumenreflexionshologramm (Merkmalsteil 500b) und ein drittes Volumenreflexionshologramm (Merkmalsteil 500c) vor. Alle Volumenreflexionshologramme besitzen vorliegend eine identische Form und grenzen im gezeigten Beispiel unmittelbar aneinander an. Sie sind deshalb beispielshaft als Polygone gestaltet, die insbesondere aus aneinander unmittelbar angrenzende Quadrate oder Rechtecke gebildet sind.

Sollte einer der Merkmalsteile 500a, 500b, 500c nicht in der vorgegebenen oder in der gewünschten Weise rekonstruieren, so ist auf eine Fälschung des Wert- oder Sicherheitsdokuments 100 zu schließen. Hierzu kann das mobile Endgerät 200 dann eine entsprechende Warnmeldung optisch am Display oder akustisch über die Lautsprecher ausgeben.

### BEZUGSZEICHENLISTE

- 100: Wert- oder Sicherheitsprodukt
- 101: obere Substratoberfläche, obere Kartenoberfläche, Oberseite
- 102: untere Substratoberfläche, untere Kartenoberfläche, Unterseite
- 110: Gesichtsbild
- 120: erstes Datenfeld
- 130: zweites Datenfeld
- 125: drittes Datenfeld
- 135: viertes Datenfeld
- 140: innenliegende Polymerlagen
- 140a: Druckschicht
- 150: äußere Schutzschicht
- 200: mobiles Endgerät / z.B. Smartphone
- 201: Lichtquelle / z.B. LED oder Display
- 202: zweite Lichtquelle / z.B. LED
- 203: dritte Lichtquelle / z.B. LED
- 204: Bildsensor/ z.B. Kamera
- 206: Display
- 500: Sicherheitsmerkmal
- 500a: erster Merkmalsteil / z.B. erstes Volumenreflexionshologramm
- 500b: zweiter Merkmalsteil / z.B. zweites Volumenreflexionshologramm
- 500c: dritter Merkmalsteil / z.B. drittes Volumenreflexionshologramm

## Patentansprüche

1. Verfahren zur Echtheitsverifikation eines aus mehreren Merkmalsteilen (500a, 500b, 500c) gebildeten und dadurch wenigstens zwei unterschiedliche optisch aktivierbare Zustände aufweisenden Sicherheitsmerkmals (500) eines Wert- oder Sicherheitsprodukts (100) unter Nutzung eines mobilen Endgeräts (200) in Form eines Smartphones, das wenigstens eine Lichtquelle (201) in Form eines Displays (206) und wenigstens einen Bildsensor (204) in Form einer Kamera des Smartphones aufweist, umfassend die Schritte:
- Bestrahlen des Sicherheitsmerkmals (500) mit der wenigstens einen Lichtquelle (201) des mobilen Endgeräts (200) unter einem ersten Winkel und prüfen, ob dadurch ein erster optisch aktiver Zustand des Sicherheitsmerkmals (500) hervorgerufen und vom Bildsensor (204) erfasst wurde,
- Bestrahlen des Sicherheitsmerkmals (500) mit der wenigstens einen Lichtquelle (201) des mobilen Endgeräts (202) unter einem vom ersten Winkel abweichenden zweiten Winkel und prüfen, ob dadurch wenigstens ein zweiter optisch aktiver Zustand des Sicherheitsmerkmals (500) hervorgerufen und vom Bildsensor (204) erfasst wurde, und
- Feststellen einer Produktfälschung, wenn einer der optisch aktiven Zustände vom Bildsensor (204) nicht oder nicht vollständig erfasst werden konnte
**dadurch gekennzeichnet, dass** zum Bestrahlen des Sicherheitsmerkmals (500) mit der wenigstens einen Lichtquelle (201) des mobilen Endgeräts (200) unter dem ersten Winkel und unter dem zweiten Winkel das Display (206) selektiv an unterschiedlichen Stellen des Displays (206) beleuchtet wird, um die wenigstens zwei der optisch aktiven Zustände des Sicherheitsmerkmals (500) hervorzurufen.

2. Verfahren nach Anspruch 1, **dadurch gekennzeichnet, dass** an dem Display (206) ein Leuchtbalken angezeigt und in einer Richtung entlang des Displays (206) verstellt wird, um unterschiedliche Bereiche des Sicherheitsmerkmals (500) zu beleuchten, um wenigstens zwei der optisch aktiven Zustände des Sicherheitsmerkmals (500) hervorzurufen.

3. Verfahren nach Anspruch 1, **dadurch gekennzeichnet, dass** am Display (206) an unterschiedlichen Stellen Leuchtfelder leuchten, wodurch alle Merkmalsteile (500a, 500b, 500c) des Sicherheitsmerkmals (500) gleichzeitig sichtbar gemacht und von der Kamera erfasst werden.

4. Verfahren nach Anspruch 1, **dadurch gekennzeichnet, dass** das mobile Endgerät wenigstens eine der Anzahl an Merkmalsteilen (500a, 500b, 500c) des zu überprüfenden Sicherheitsmerkmals (500) entsprechende Anzahl an Lichtquellen (200, 201, 202) aufweist, und dass die Lichtquellen (200, 201, 202) zeitlich wiederkehrend eingeschaltet werden, um wenigstens zwei der optisch aktiven Zustände des Sicherheitsmerkmals (500) hervorzurufen, die dann mittels des Bildsensors (204) erfasst werden.

5. Verfahren nach einem der Ansprüche 1 bis 4, **dadurch gekennzeichnet, dass** alle vom Bildsensor (204) erfassten Bilder des Sicherheitsmerkmals (500) in ein gemeinsames Bild des Sicherheitsmerkmals (500) oder des ganzen Wert- oder Sicherheitsprodukts (100) mit den optischen aktiven Zuständen der Merkmalsteile (500a, 500b, 500c) gefasst werden, und dass die im gemeinsamen Bild enthaltenen Merkmalsteile (500a, 500b, 500c) mit einem Referenzwert zur Echtheitsverifikation abgeglichen werden.

6. Verfahren nach Anspruch 5, **dadurch gekennzeichnet, dass** das mobile Endgerät (200) einen Lagesensor umfasst, dass beim Bestrahlen des Sicherheitsmerkmals (500) die Lage des mobilen Endgeräts (200) bezüglich dem Wert- oder Sicherheitsprodukt (100) anhand der vom Bildsensor (204) und der vom Lagesensor erfassten Daten bestimmt wird, um daraus und aus den erfassten Einzelbildern das gemeinsame Bild randbeschnitten zusam menzufassen.

7. Verfahren nach Anspruch 5 oder 6, **dadurch gekennzeichnet, dass** der Referenzwert für den Abgleich als eine Information auf dem Wert- oder Sicherheitsprodukt (100) vorliegt, die mit dem Bildsensor (204) ebenfalls erfasst wird.

8. Verfahren nach Anspruch 6 oder 7, **dadurch gekennzeichnet, dass** der Referenzwert für den Abgleich eine in einer Datenbank gespeicherte Information ist, die in einem physikalischen Speicher des mobilen Endgeräts (200) oder in einem physikalischen Speicher eines übergeordneten Servers hinterlegt ist.

9. Verfahren nach einem der Ansprüche 1 bis 8, **dadurch gekennzeichnet, dass** die Lichtquelle (201) eingerichtet ist, unterschiedliche Farben zu emittieren, und dass die Lichtquelle (201) ihre Farbgebung in Abhängigkeit eines Einfallswinkels der von ihr emittierten Lichtstrahlen auf das Sicherheitsmerkmal (500) ändert.

10. Verfahren nach Anspruch 9, **dadurch gekennzeichnet, dass** das mobile Endgerät (200) einen Lagesensor umfasst, und dass der Einfallswinkel der Lichtstrahlen auf das Sicherheitsmerkmal (500) unter Nutzung der vom Lagesensor erfassten Daten bestimmt wird.

11. Verfahren nach einem der Ansprüche 1 bis 10, **dadurch gekennzeichnet, dass** ein erster Merkmalsteil (500a) durch ein erstes Volumenreflexionshologramm gebildet ist, das bei einer ersten Rekonstruktionswellenlänge und einer ersten Rekonstruktionseinstrahlrichtung rekonstruiert, und dass wenigstens ein zweiter Merkmalsteil (500b) durch ein zweites Volumenreflexionshologramm (500b) gebildet ist, das bei einer von der ersten Rekonstruktionseinstrahlrichtung abweichenden zweiten Rekonstruktionseinstrahlrichtung rekonstruiert.

12. Verfahren nach Anspruch 11, **dadurch gekennzeichnet, dass** das zweite Volumenreflexionshologramm (500b) ausschließlich bei einer von der ersten Rekonstruktionswellenlänge abweichenden zweiten Rekonstruktionswellenlänge rekonstruiert.

## Claims

1. A method for verifying the authenticity of a security feature (500), which is formed from a plurality of feature parts (500a, 500b, 500c) and thereby has at least two different optically activatable states, of a value or security product (100), using a mobile device (200) in the form of a smartphone which has at least one light source (201) in the form of a display (206) and at least one image sensor (204) in the form of a camera of the smartphone, comprising the steps:
- irradiating the security feature (500) with the at least one light source (201) of the mobile device (200) at a first angle and checking whether a first optically active state of the security feature (500) has thereby been caused and detected by the image sensor (204),
- irradiating the security feature (500) with the at least one light source (201) of the mobile device (202) at a second angle differing from the first angle and checking whether at least a second optically active state of the security feature (500) has thereby been caused and detected by the image sensor (204), and
- detection of a product counterfeit if one of the optically active states could not or not completely be detected by the image sensor (204)
**characterized in that** for irradiating the security feature (500) with the at least one light source (201) of the mobile device (200) at the first angle and at the second angle, the display (206) is selectively illuminated at different locations of the display (206) to cause the at least two of the optically active states of the security feature (500).

2. The method according to claim 1, **characterized in that** a light bar is displayed on the display (206) and adjusted in a direction along the display (206) to illuminate different areas of the security feature (500) to cause at least two of the optically active states of the security feature (500).

3. The method according to claim 1, **characterized in that** illuminated fields light up at different points on the display (206), as a result of which all feature parts (500a, 500b, 500c) of the security feature (500) are made visible simultaneously and are detected by the camera.

4. The method according to claim 1, **characterized in that** the mobile device has at least a number of light sources (200, 201, 202) corresponding to the number of feature parts (500a, 500b, 500c) of the security feature (500) to be checked, and **in that** the light sources (200, 201, 202) are switched on at recurring intervals in order to produce at least two of the optically active states of the security feature (500), which are then detected by means of the image sensor (204).

5. The method according to any one of claims 1 to 4, **characterized in that** all images of the security feature (500) captured by the image sensor (204) are combined into a common image of the security feature (500) or of the entire value or security product (100) with the optically active states of the feature parts (500a, 500b, 500c), and **in that** the feature parts (500a, 500b, 500c) contained in the common image are compared with a reference value for authenticity verification.

6. The method according to claim 5, **characterized in that** the mobile device (200) comprises a position sensor, **in that**, when the security feature (500) is irradiated, the position of the mobile device (200) with respect to the value or security product (100) is determined on the basis of the data captured by the image sensor (204) and the data captured by the position sensor, in order to combine the common image edge-cropped therefrom and from the captured individual images.

7. The method according to claims 5 or 6, **characterized in that** the reference value for the matching is present as information on the value or security product (100), which is also captured with the image sensor (204).

8. The method according to claims 6 or 7, **characterized in that** the reference value for the comparison is information stored in a database which is stored in a physical memory of the mobile device (200) or in a physical memory of a higher-level server.

9. The method according to any one of claims 1 to 8, **characterized in that** the light source (201) is set up to emit different colors, and **in that** the light source (201) changes its colouring depending on an angle of incidence of the light beams emitted by it onto the security feature (500).

10. The method according to claim 9, **characterized in that** the mobile device (200) comprises a position sensor, and **in that** the angle of incidence of the light beams on the security feature (500) is determined using the data acquired by the position sensor.

11. The method according to any one of claims 1 to 10, **characterized in that** a first feature part (500a) is formed by a first volume reflection hologram which reconstructs at a first reconstruction wavelength and a first reconstruction single-beam direction, and **in that** at least a second feature part (500b) is formed by a second volume reflection hologram (500b) which reconstructs at a second reconstruction single-beam direction differing from the first reconstruction single-beam direction.

12. The method according to claim 11, **characterized in that** the second volume reflection hologram (500b) reconstructs exclusively at a second reconstruction wavelength differing from the first reconstruction wavelength.

## Revendications

1. Procédé de vérification de l'authenticité d'une caractéristique de sécurité (500) formée de plusieurs parties de caractéristique (500a, 500b, 500c) et présentant ainsi au moins deux états différents d'un produit de valeur ou de sécurité (100) pouvant être activés optiquement en utilisant un terminal mobile (200) sous la forme d'un smartphone qui présente au moins une source de lumière (201) sous la forme d'un écran (206) et au moins un capteur d'images (204) sous la forme d'une caméra du smartphone, comprenant les étapes de :
- exposition de la caractéristique de sécurité (500) à la au moins une source de lumière (201) du terminal mobile (200) selon un premier angle et vérification permettant de savoir si un premier état optiquement actif de la caractéristique de sécurité (500) a ainsi été induit et détecté par le capteur d'images (204),
- exposition de la caractéristique de sécurité (500) à la au moins une source de lumière (201) du terminal mobile (202) selon un second angle différent du premier angle et vérification permettant de savoir si au moins un second état optiquement actif de la caractéristique de sécurité (500) a ainsi été induit et détecté par le capteur d'images (204), et
- constatation d'une contrefaçon lorsqu'un des états optiquement actifs n'a pas pu ou n'a pas pu entièrement être détecté par le capteur d'images (204)
**caractérisé en ce que** pour l'exposition de la caractéristique de sécurité (500) à la au moins une source de lumière (201) du terminal mobile (200) selon le premier et le second angles, l'écran (206) est éclairé sélectivement à différents endroits de l'écran (206) pour induire les au moins deux des états optiquement actifs de la caractéristique de sécurité (500).

2. Procédé selon la revendication 1, **caractérisé en ce qu'**une barre lumineuse s'affiche à l'écran (206) et est déplacée dans un sens le long de l'écran (206) pour éclairer différentes zones de la caractéristique de sécurité (500) afin d'induire au moins deux des états optiquement actifs de la caractéristique de sécurité (500).

3. Procédé selon la revendication 1, **caractérisé en ce que** des champs lumineux s'allument à différents endroits de l'écran (206), selon lesquels toutes les parties de caractéristique (500a, 500b, 500c) de la caractéristique de sécurité (500) sont rendues visibles simultanément et sont détectées par la caméra.

4. Procédé selon la revendication 1, **caractérisé en ce que** le terminal mobile (200) présente au moins un nombre de sources de lumière (200, 201, 202) correspondant au nombre de parties de caractéristique (500a, 500b, 500c) de la caractéristique de sécurité (500) à contrôler, et **en ce que** les sources de lumière (200, 201, 202) sont activées de manière récurrente dans le temps pour induire au moins deux des états optiquement actifs de la caractéristique de sécurité (500) qui sont ensuite détectés au moyen du capteur d'images (204).

5. Procédé selon l'une quelconque des revendications 1 à 4, **caractérisé en ce que** toutes les images détectées par le capteur d'images (204) de la caractéristique de sécurité (500) sont détectées dans une image commune de la caractéristique de sécurité (500) ou de l'intégralité du produit de valeur ou de sécurité (100) avec les états optiquement actifs des parties de caractéristique (500a, 500b, 500c), et **en ce que** les parties de caractéristique (500a, 500b, 500c) contenues dans l'image commune sont comparées à une valeur de référence pour la vérification de l'authenticité.

6. Procédé selon la revendication 5, **caractérisé en ce que** le terminal mobile (200) comprend un capteur de position, **en ce que** lors de l'exposition de la caractéristique de sécurité (500), la position du terminal mobile (200) par rapport au produit de valeur ou de sécurité (100) est déterminée à l'aide des données détectées par le capteur d'images (204) et par le capteur de position pour regrouper en coupant les bords l'image commune à partir de ces données et à partir des images individuelles détectées.

7. Procédé selon la revendication 5 ou 6, **caractérisé en ce que** la valeur de référence est présente pour la comparaison en tant qu'information sur le produit de valeur ou de sécurité (100) qui est également détectée avec le capteur d'images (204).

8. Procédé selon la revendication 6 ou 7, **caractérisé en ce que** la valeur de référence pour la comparaison est une information enregistrée dans une base de données qui est stockée dans une mémoire physique du terminal mobile (200) ou dans une mémoire physique d'un serveur de niveau supérieur.

9. Procédé selon l'une quelconque des revendications 1 à 8, **caractérisé en ce que** la source de lumière (201) est configurée pour émettre différentes couleurs, et **en ce que** la source de lumière (201) modifie sa teinte en fonction d'un angle d'incidence des rayons lumineux qu'elle émet sur la caractéristique de sécurité (500).

10. Procédé selon la revendication 9, **caractérisé en ce que** le terminal mobile (200) comprend un capteur de position, et **en ce que** l'angle d'incidence des rayons lumineux sur la caractéristique de sécurité (500) est déterminé en utilisant les données détectées par le capteur de position.

11. Procédé selon l'une quelconque des revendications 1 à 10, **caractérisé en ce qu'**une première partie de caractéristique (500a) est formée par un premier hologramme par réflexion volumique qui est reconstruit pour une première longueur d'onde de reconstruction et une première direction d'incidence de reconstruction, et **en ce qu'**au moins une seconde partie de caractéristique (500b) est formée par un second hologramme par réflexion volumique (500b) qui est reconstruit pour une seconde direction d'incidence de reconstruction différente de la première direction d'incidence de reconstruction.

12. Procédé selon la revendication 11, **caractérisé en ce que** le second hologramme par réflexion volumique (500b) est reconstruit exclusivement pour une seconde longueur d'onde de reconstruction différente de la première longueur d'onde de reconstruction.
